## Europäisches Patentamt

## European Patent Office

## Office européen des brevets

(11) Publication number: **0 178 818**
**B1**

## EUROPEAN PATENT SPECIFICATION

(45) Date of publication of patent specification: **04.07.90**

(51) Int. Cl.⁵: **F 16 G 13/04, F 16 H 7/06**

(21) Application number: **85306997.9**

(22) Date of filing: **01.10.85**

(54) Power transmission chain.

(30) Priority: **17.10.84 US 661545**

(43) Date of publication of application:
**23.04.86 Bulletin 86/17**

(45) Publication of the grant of the patent:
**04.07.90 Bulletin 90/27**

(84) Designated Contracting States:
**DE FR GB NL**

(56) References cited:
**EP-A-0 092 900**
**WO-A-82/00866**
**US-A-4 342 560**
**US-A-4 509 937**

(73) Proprietor: **Borg-Warner Automotive, Inc.**
**3001, West Big Beaver Road**
**Troy Michigan 48048 (US)**

(72) Inventor: **Ledvina, Timothy James**
**1960 Danby Road**
**Ithaca New York 14850 (US)**
Inventor: **Mead, Robert Henry**
**222 Enfield Falls Road**
**Ithaca New York 14850 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

Power transmission chains are widely used in the automotive industry not only for ignition timing but also for transferring power to the driving wheels of a vehicle especially in a front wheel drive automobile. Power transmission chains are also widely used for industrial applications. One type of chain so used is referred to as a "silent chain" in which the chain links are formed with a pair of toes separated by a crotch, each toe being defined by an outside flank and an inside flank, the latter being joined by the crotch. In most, if not practically all modern silent chains, all links, which are arranged in transverse sets joined together by pivot means, are the same. These chains are adapted to be used with toothed sprockets in the power transmission assembly or arrangement. Historically, the outside flank or flanks of industrial power transmission chains drivingly engaged the sprockets while the inside flank or flanks of automotive timing or motion transferring chains engaged the sprockets. Great care was taken in avoiding the mixing of the two types of links in chain assembly plants manufacturing both types of links.

However, it was found that a mixture of the two general types of links provided a chain that generated less noise when used in automotive applications than did some chains constructed of only one type of link or substantially no more noise than prior chains of special construction. The chains incorporating a mixture of the two general types of links have been found to be more durable than the prior chains of special construction. A chain containing a mixture of the two general types of links can be assembled in various patterns and is described and claimed in US Patent No 4 342 560. The chain so described and claimed in this patent has enjoyed great commercial success.

The invention herein described relates to power transmission chains of the "silent" chain type which is relatively quiet in operation and which uses a mixture of two varieties of the inside flank contacting link. As such, the chain is an endless chain constructed of a plurality of metal links arranged as transverse sets, one set being interleaved or laced with the next set of links, the sets being joined by a pivot means, for example, a round pin or other type of joint, such as a pin and rocker. Various joints are well known in the art and need no further identification.

WO 82/00866 describes a chain and sprocket drive in accordance with the prior art portion of claim 1. As compared therewith the present invention, as described in the characterizing part of claim 1, provides for a smooth acting more efficient chain due to the driving contact being by the internal flanks only of the chain link teeth.

As a preferred embodiment, the sets of links are arranged in a more or less random pattern which can be determined, as for example, by the use of a calculator or the like. All links in a set are the same. Also, the chain may include guide links to guide the chain on the sprockets of the transmission. These are well known in the art and do not drivingly engage the sprocket teeth.

It should be noted that it is during the transition from the straight line position as the links approach the sprocket along the tangent line to full chordal position that the inside flanks of the links and only the inside flanks of the links drivingly engage the sprocket teeth and articulation of the chain links first occurs.

Each inside flank of each link is defined by a convex curve. In the preferred embodiment the inside flank of each link is defined by a curve having the same radius with the curve of some sets of links being struck from a first predetermined center and the curve for other sets of links being struck from a second and different predetermined center. One of the effects of this is that the toes of some links are spread or spaced apart a greater distance than those of other links. However, the links are also shaped that the pitch for all links is the same and a major portion of the outside flanks of all links are substantially identical.

It is also posible to construct the links of some sets of links with inside flanks of a first radius and those of other sets of links defined by a second and different radius, each radius being struck from the same centers or different centers.

When a chain according to this invention is used in a sprocket transmission, the noise pattern generated by the interaction of the links and the sprocket teeth is modified when compared with the noise pattern generated by a chain and a sprocket wherein all links ar identical. The chain as thus described is suitable for use with a variety of sprocket tooth forms including sprockets in which the profile of the teeth is defined by an involute.

Fig. 1 is a side view of a portion of a sprocket and a segment of a chain constructed according to this invention, with portions broken away;

Figs. 2 and 3 are plan views of the preferred embodiment of two link forms used in the chain segment of Fig. 1;

Fig. 4 is a plan view of the links of Figs. 2 and 3 with one link superimposed on the other to illustrate the differences therebetween and showing the centers of the radii of the inside flanks;

Fig. 5 is a plan view of a segment of a chain constructed according to this invention; and

Fig. 6 is a side view of the segment of chain illustrated in Fig. 5;

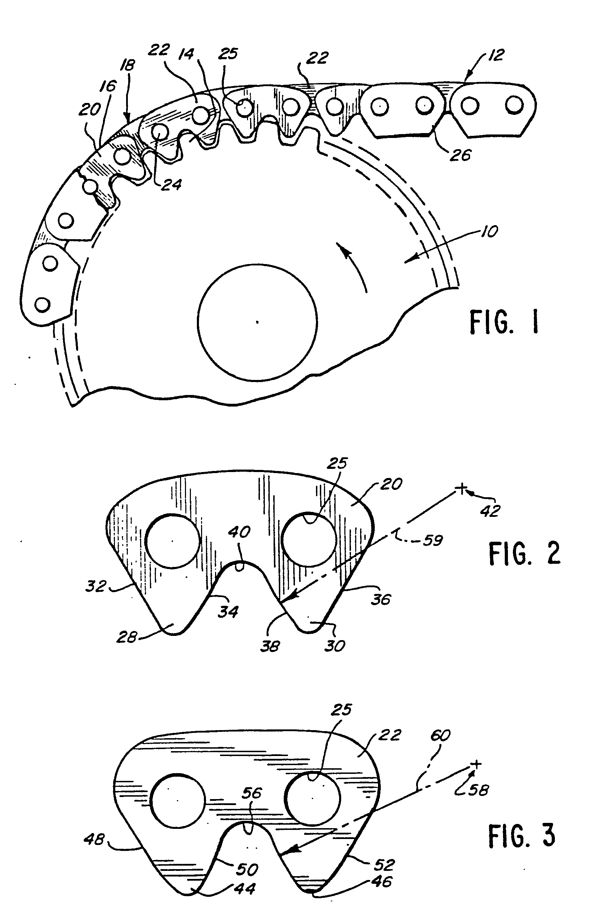

Fig. 1 illustrates a portion of a sprocket-drive chain combination comprising a sprocket 10 and a chain 12, the sprocket 10 having a plurality of spaced teeth 14, it being understood that a complete drive system includes at least a pair of sprockets which may be of different diameters and thus each having a different number of teeth. The spacing of the teeth on the sprockets is generally the same. The chain 12 is constructed of joined sets 16 and 18 of links 20 and 22. The adjacent sets of links are joined by pivot means 24, illustrated as round pins, the pivot means being received in aligned sets of apertures 25. Alternate sets of links differ in the number of links. Guide links 26 are provided which are used to maintain the lateral alignment of a chain on the sprockets. The guide links illustrated are of the outside variety and have no driving engagement with the sprocket teeth. An inside guide link (not shown, but known in the art) may be used in which case the sprocket is grooved to receive the guide links. The pivot means 24 are usually peened over to maintain the integrity of the chain assembly; however, other methods may be used if desirable.

As stated before, each link in a set is the same; links 20 are used in sets 16 and links 22 are used in sets 18. Both links 20 and 22 are so constructed to drivingly contact the sprocket teeth 14 with their inside flanks only.

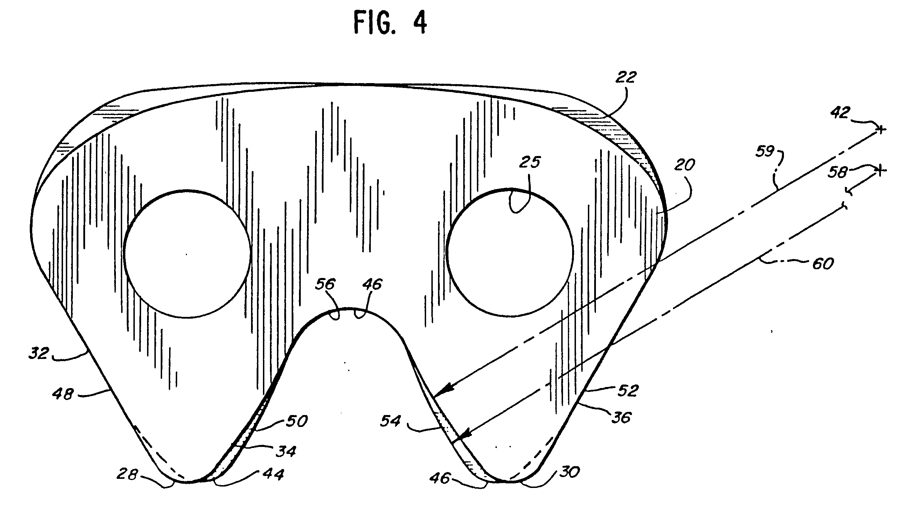

Link 20 is illustrated in Figs. 2 and 4 and is defined by a pair of spaced toes 28 and 30, toe 28 being defined by an outside flank 32 and an inside flank 34 while toe 30 is defined by an outside flank 36 and an inside flank 38. A crotch 40 joins the inside flanks 34 and 38. The inside flanks 34 and 38 are each convexly curved, the center of curvature of one inside flank being designated by the reference character 42, see especially Fig. 2. The other inside flank is similarly defined. Link 22 is illustrated in Figs. 3 and 4, and is defined by a pair of spaced toes 44 and 46, toe 44 being defined by an outside flank 48 and an inside flank 50 while toe 46 is defined by an outside flank 52 and an inside flank 54. A crotch 56 joins the inside flanks 50 and 54. The inside flanks 50 and 54 are each convexly curved, the center of curvature of one inside flank being designated by the reference character 58, see especially Fig. 3. The other inside flank is similarly defined. While the radius 59 for the inside flanks 34 and 38 and the radius 60 for the inside flanks 50 and 54 are the same, the centers of curvature 42 and 58 are at different locations relative to the links, and thus the toes 28 and 30 of link 20 are spaced apart a different distance than the toes 44 and 46 of link 22. When viewing the links 20 and 22 as in Fig. 4, it is observed that the pitch (the distance between aperture centers) is the same for both link forms and for the major part, the outside flanks 32 and 36 of link 20 coincide with the outside flanks 48 and 52, respectively, of link 22.

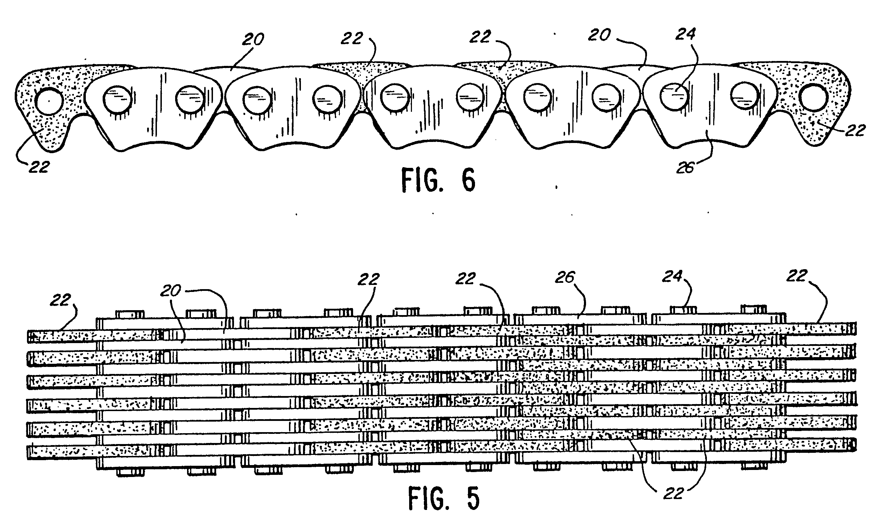

The sets of links can be assembled in many patterns and generally in a random pattern which can be generated by a hand held calculator or by more sophisticated means, such as a computer. A segment of one such chain is illustrated in Figs. 5 and 6; the same reference characters previously used herein refer to like parts. Links 22 are stippled to distinguish from links 20.

One arrangement of links (identified by the reference characters used herein) by sets in an 84 pitch chain, i.e., 84 sets of links, as follows:

| Set No. | Link Form | Set No. | Link Form | Set No. | Link Form |
|---|---|---|---|---|---|
| 1 | 20 | 29 | 22 | 57 | 22 |
| 2 | 20 | 30 | 22 | 58 | 22 |
| 3 | 22 | 31 | 20 | 59 | 20 |
| 4 | 22 | 32 | 20 | 60 | 22 |
| 5 | 22 | 33 | 20 | 61 | 20 |
| 6 | 20 | 34 | 22 | 62 | 20 |
| 7 | 20 | 35 | 22 | 63 | 22 |
| 8 | 22 | 36 | 20 | 64 | 20 |
| 9 | 20 | 37 | 22 | 65 | 20 |
| 10 | 20 | 38 | 22 | 66 | 20 |
| 11 | 22 | 39 | 20 | 67 | 20 |
| 12 | 22 | 40 | 20 | 68 | 20 |
| 13 | 20 | 41 | 20 | 69 | 22 |
| 14 | 20 | 42 | 20 | 70 | 22 |
| 15 | 22 | 43 | 22 | 71 | 20 |
| 16 | 20 | 44 | 20 | 72 | 22 |
| 17 | 20 | 45 | 22 | 73 | 22 |
| 18 | 22 | 46 | 22 | 74 | 20 |
| 19 | 20 | 47 | 20 | 75 | 20 |
| 20 | 22 | 48 | 20 | 76 | 20 |
| 21 | 20 | 49 | 20 | 77 | 22 |
| 22 | 20 | 50 | 20 | 78 | 22 |
| 23 | 22 | 51 | 22 | 79 | 22 |
| 24 | 20 | 52 | 22 | 80 | 22 |
| 25 | 20 | 53 | 22 | 81 | 20 |
| 26 | 22 | 54 | 20 | 82 | 20 |
| 27 | 22 | 55 | 22 | 83 | 22 |
| 28 | 22 | 56 | 22 | 84 | 22 |

It is believed that most similar random arrangements will result in chains having substantially the same performance as regards to noise generated.

The chains of this invention are compatible with standard involute sprocket teeth or with profiles of sprocket teeth known in the art. Modified sprockets such as those disclosed in U.S. patents Nos. 3,377,875, 3,495,468 and 4,168,634 can also be used with the chain of this invention.

In subjective testing, a chain constructed in accordance with the preferred embodiment of this invention and tested in an automobile on conventional sprockets produced results which would be generally acceptable by a trained and experienced observer. It is to be understood, however, that subjective ratings as noted vary from person to person, vary depending upon the sprockets used, vary due to transfer case construction and other differences in automobiles, vary due to road and weather conditions, and vary according to drive ratio. There may also be other factors which can introduce differences in the noise evaluation of chain and sprocket drives.

Noise evaluations can be made using the following rating system which is generally self-explanatory.

| Vehicle Evaluation Rating System | | | | | | | | | |
|---|---|---|---|---|---|---|---|---|---|
| | Unacceptable | | | | Border Line Acceptable | | Acceptable | | |
| Rating Index | 1 | 2 | 3 | 4 | 5 | 6 | 7 | 8 | 9 | 10 |

| Evaluation of any particular vehicle component performance | Poor | | Customer Complaint | Border Line | Barely Acceptable | Fair | Good | Very Good | Excellent |
|---|---|---|---|---|---|---|---|---|---|

| Noise, vibration harshness, shake etc. | Not Acceptable | | Objection-able | Requires Improve-ment | Medium | Light | Very Light | Trace | Not Noticeable |
|---|---|---|---|---|---|---|---|---|---|

| Condition noted by | All Customers | Average Customer | Critical Customer | | | Trained Observer | Not Per-ceptible |
|---|---|---|---|---|---|---|---|

| Procedure | Requires Action | | Investigation Required | Accept | | Check Results |
|---|---|---|---|---|---|---|

# EP 0 178 818 B1

Chains made according to the preferred embodiment of this invention with a round pin as the pivot member have been tested as follows:

1. in a Chevrolet Citation, V-6 engine, sunny day at 15.6°C (60°F) standard involute sprockets and a random set pattern, resulting in an overall noise index rating of 6.5. This rating was calculated by averaging the indexes in 1st, 2nd and 3rd gear drive ranges of 6, 6.5, 6.5, respectively and the index in 2nd gear coast range of 7.

2. in the same automobile, same sprockets but the chain having a lacing of 2 rows of one type of link alternating with 2 rows of the other type of link, windy day at 15.6°C (60°F) resulting in an overall noise index rating of 5. This rating was calculated by averaging the indexes in 1st, 2nd and 3rd gear drive ranges of 5, 5 and 5.5, respectively, and in 2nd and 3rd gear coast ranges of 6.5 and 6.5, respectively.

3. in an Oldsmobile Omega, 4 cylinder engine, cloudy day at 17°C (35°F), standard involute sprockets, and a random set pattern, resulting in an overall noise index rating of 5.5. This rating was calculated by averaging the indexes in 1st, 2nd and 3rd gear drive ranges of 5.5, 5 and 5.5, respectively, and in 2nd and 3rd gear coast ranges of 6 and 6, respectively.

A standard OEM chain in the same vehicles was rated about 6.5. The standard chain comprised a plurality of link sets pivotally connected by a pin and rocker joint of a type claimed in Jeffrey U.S. patent No. 4,010,656. The chain of this invention is less expensive to make than the pin and rocker joint OEM chain, as described, and possesses sufficient strengh and durability for its intended purpose.

It is also possible to construct a chain with some sets of links having inside flanks defined by a first radius and other sets of links having inside flanks defined by a second and different radius, both radii being struck from a common center or different centers. As such, the time interval of driving contact between the links' inside flanks and the sprocket teeth will differ for the two types of links and the noise pattern will be modified from that of the chain constructed of only one type of link.

## Claims

1. A power transmission chain and sprokect drive comprising a toothed sprocket (10) and a chain (12) composed of a plurality of sets (16, 18) of links (20, 22) with pivot means (24) joining successive sets of links to permit articulation of one set of links relative to another set of links, each of said links (20, 22) having the same pitch distance between point centers and being defined by a pair of spaced toes (28, 30, 44, 46) each formed by a pair of diverging flanks (32, 34, 36, 38, 48, 50, 52, 54), the toes (28, 30) of the links (20) in some sets of links being differently spaced as compared with the toes (44, 46) of the links (22) in other sets of links, each pair of diverging flanks comprising an outside flank and an inside flank, the inside flank (34, 38 or 50, 54) of each link in each set being joined by a crotch (40 or 56), characterised in that each link in each set is shaped drivingly to contact said sprocket teeth (14) with their inside flanks only, the internal flanks of the differently shaped toes being differently shaped in such a manner that during operation of the chain and sprocket drive the time interval of driving contact with said sprocket teeth for the links (20) of said some sets of links is different from the time interval of driving contact for the links (22) of said other sets of links, such driving contact taking place from initial tangential positioning of a link in relation to the sprocket (10) until the link is in a full chordal position with relation to the sprocket (10).

2. A drive according to claim 1, characterised in that the inside flanks (34, 38, 50, 54) of the links in said sets of links are defined by convexly curved arcuate surfaces.

3. A drive according to claim 2, characterised in that the curves defining the inside flanks have the same radius (59, 60) with the centre of curvature (42) of the inside flank curve of each links of said some sets of links being different from the centre of curvature (58) of the inside flank curve of each link of said other sets of links.

4. A drive according to claim 1 or 2, characterised in that each inside flank is defined by a curve of a predetermined radius (59, 60), the inside flanks of the links in said some sets of links by a curve of a first predetermined radius and the inside flanks of the links in said other sets of links by a curve of a second and different radius.

5. A drive according to claim 4, in which the centres (42, 58) of said radii (59, 60) are the same.

6. A drive according to claim 4, in which the centres (42, 58) of a said radii (59, 60) are different.

7. A drive according to any preceding claim, characterised in that the outside flanks (32, 36, 48, 52) of said links in said sets of links are straight.

## Patentansprüche

1. Kraftübertragungskette und Kettenradantrieb mit einem mit Zähnen versehenen Kettenrad (10) und einer Kette (12), die aus mehreren Sätzen (16, 18) von Gliedern (20, 22) besteht, wobei Schwenkzapfen (24) aufeinanderfolgende Sätze von Gliedern verbinden, um eine gelenkige Bewegung eines Satzes von Gliedern relativ zu einem anderen Satz von Gliedern zu ermöglichen, wobei jedes der Glieder (20, 22) den gleichen Teilungsabstand zwischen Spitzenmittelpunkten aufweist und durch ein Paar beabstandeter Nasen (28, 30, 44, 46) gebildet wird, die jede durch ein Paar auseinanderstrebender Flanken (32, 34, 36, 38, 48, 50, 52, 54) gebildet wird, wobei die Nasen (28, 30) der Glieder (20) in einigen Sätzen von Gliedern verschieden beabstandet sind im Vergleich mit Nasen (44, 46) der Glieder (22) in anderen Sätzen von Gliedern, wobei jedes Paar von auseinanderstrebenden Flanken eine Außenflanke und eine Innenflanke aufweist, wobei die Innenflanke (34, 38 oder 50, 54) von jedem Glied in jedem Sazt durch eine Gabelung (40 oder 56) verbunden ist, dadurch gekennzeichnet, daß jedes Glied in jedem Satz so ausgebildet ist, daß es treibend die Kettenradzähne (14) nur mit den Innenflanken berührt, wobei die Innenflanken der verschieden geformten Nasen verschieden derart geformt sind, daß während des Betriebes der Kette und des Kettenradantriebs das Zeitintervall des Treibkontaktes mit den Kettenradzähnen für die Glieder (20) der einigen Sätze von Gliedern verschieden ist von dem Zeitintervall des Treibkontaktes für die Glieder (22) der anderen Sätze von Gliedern, wobei solch ein Treibkontakt stattfindet von einer ursprünglich tangentialen Stellung eines Gliedes in bezug zu dem Kettenrad (10) bis das Glied sich in einer vollen Sehnenstellung mit Bezug auf das Kettenrad (10) befindet.

2. Antrieb nach Anspruch 1, dadurch gekennzeichnet, daß die Innenflanken (34, 38, 50, 54) der Glieder in den Sätzen von Gliedern durch konvex gekrümmte Bogenflächen gebildet werden.

3. Antrieb nach Anspruch 2, dadurch gekennzeichnet, daß die Kurven, die die Innenflanken bilden, den gleichen Radius (59, 60) aufweisen, wobei der Krümmungsmittelpunkt (42) der Innenflankenkurve von jedem Glied der einigen Sätze von Gliedern verschieden ist von dem Krümmungsmittelpunkt (58) der Innenflankenkurve von jedem Glied der anderen Sätze von Gliedern.

4. Antrieb nach Anspruch 1 oder 2, dadurch gekennzeichnet, daß jede Innenflanke durch eine Kurve von einem vorbestimmten Radius (59, 60) gebildet wird, die Innenflanken der Glieder in den einigen Sätzen von Gliedern durch eine Kurve mit einem ersten vorbestimmten Radius und die Innenflanken der Glieder in den anderen Sätzen von Gliedern durch eine Kurve mit einem zweiten und verschiedenen Radius.

5. Antrieb nach Anspruch 4, dadurch gekennzeichnet, daß die Mittelpunkte (42, 58) der Radien (59, 60) die gleichen sind.

6. Antrieb nach Anspruch 4, dadurch gekennzeichnet, daß die Mittelpunkte (42, 58) der Radien (59, 60) verschieden sind.

7. Antrieb nach einem der vorangegangenen Ansprüche, dadurch gekennzeichnet, daß die Außenflanken (32, 36, 48, 52) der Glieder in den Sätzen von Gliedern gerade sind.

**Revendications**

1. Commande par chaîne de transmission et pignon comprenant un pignon denté (10) et une chaîne (12) constituée d'une multitude de jeux (16, 18) de maillons (20, 22) avec un moyen de pivot (24) reliant des jeux successifs de maillons pour permettre l'articulation d'un jeu de maillons par rapport à un autre jeu de maillons, chacun des maillons (20, 22) ayant la même distance de pas entre centres et étant défini par une paire de talons espacés (28, 30, 44, 46) formés chacun d'une paire de flancs divergents (32, 34, 36, 38, 48, 50, 52, 54), les talons (28, 30) des maillons (20) dans certains jeux de maillons étant espacés de façon différente par rapport aux talons (44, 46) des maillons (22) des autres jeux de maillons, chaque paire de flancs divergents comprenant un flanc extérieur et un flanc intérieur, le flanc intérieur (34, 38 ou 50, 54) de chaque maillon de chaque jeu étant réuni par une fourche (40 ou 56), caractérisée en ce que chaque maillon de chaque jeu est façonné de manière motrice pour être en contact avec les dents (14) du pignon par leurs flancs intérieurs seulement, les flancs internes des talons de forme différente étant façonnes de façon différente d'une manière telle que pendant le fonctionnement de la commande par chaîne et pignon, l'intervalle de temps du contact d'entraînement avec les dents du pignon pour les maillons (20) desdits certains jeux de maillons est différent de l'intevalle de temps du contact d'entraînement pour les maillons (22) des autres jeux de maillons, un tel contact d'entraînement se produisant à partir de la mise en place initiale tanquentielle d'une maillon par rapport au pignon (10) jusqu'à ce que le maillon soit dans une position complète à la corde par rapport au pignon (10).

2. Commande selon la revendication 1, caractérisée en ce que les flancs intérieurs (34, 38, 50, 54) des maillons des jeux de maillons sont définis par des surfaces en forme d'arc incurvé de manière convexe.

3. Commande selon la revendication 2, caractérisée en ce que les courbes définissant les flancs intérieurs ont le même rayon (59, 60), avec le centre de courbure (42) de la courbe des flancs intérieurs de chaque maillon desdits certains jeux de maillons étant différent du centre de courbure (58) de la courbe des flancs intérieurs de chaque maillon desdits autres jeux de maillons.

4. Commande selon la revendication 1 ou 2, caractérisée en ce que chaque flanc intérieur est défini par une courbe d'un rayon prédéterminé (59, 60), les flancs intéieurs des maillons desdits certains jeux de maillons l'étant par une courbe d'une premier rayon prédéterminé et les flancs intérieurs des maillons desdits autres jeux de maillons l'étant par une courbe d'un second rayon différent.

5. Commande selon la revendication 4, dans laquelle les centres (42, 58) des rayons (59, 60) sont les mêmes.

6. Commande selon la revendication 4, dans laquelle les centres (42, 58) des rayons (59, 60) sont différents.

7. Commande selon l'une quelconque des revendications précédentes, caractérisée en ce que les flancs extérieurs (32, 36, 48, 52) des maillons desdits jeux de maillons sont rectilignes.

FIG. 1

FIG. 2

FIG. 3

FIG. 4

EP 0 178 818 B1

FIG. 6

FIG. 5

EP 0 178 818 B1